# FASCICULE DE BREVET EUROPEEN

(11) **EP 0 518 733 B1**
(45) Date de publication et mention de la délivrance du brevet: **23.08.1995**
(21) Numéro de dépôt: 92401522.5
(22) Date de dépôt: 04.06.1992
(51) Int. Cl.: G02B 26/10, H04N 3/09

(54) **Procédé et dispositif de balayage pour un dispositif de prise de vue opto-électronique à grand champ et à haute résolution**
Verfahren und Anordnung zum Abtasten für ein opto-elektronisches, hochauflösendes Weitwinkel-Abbildungsgerät
Method and scanning device for an optoelectronic wide angle imaging apparatus with high resolution

(30) Priorité: 14.06.1991 FR 9107334
(43) Date de publication de la demande: 16.12.1992
(73) Titulaire: AEROSPATIALE Société Nationale Industrielle, 75781 Paris Cédex 16 (FR)
(72) Inventeur: Jeandeau, Serge, F-91700 Ste Genevieve-des-Bois (FR)
(74) Mandataire: Bonnetat, Christian

(56) Documents cités:
- EP-A- 0 170 317
- DE-A- 3 005 427
- US-A- 4 256 364
- APPLIED OPTICS, vol. 22, no. 24, Décembre 1983, New York, pp. 3935-3942 ; J. COHEN-SABBAN et al.: 'Distortion-free 2-D space and surface scanners using light deflectors'
- PATENT ABSTRACTS OF JAPAN vol. 9, no. 195 (P-379)(1918) 31 Août 1985 ; & JP-A-60 060 524

## Description

La présente invention concerne un procédé et un dispositif de balayage pour un dispositif de prise de vue opto-électronique à grand champ et à haute résolution. Quoique non exclusivement, elle est particulièrement appropriée à de tels dispositifs de prise de vue sensibles au rayonnement infrarouge.

On sait que les dispositifs de prise de vue opto-électroniques à grand champ et à haute résolution comportent un détecteur photosensible, présentant généralement la forme d'une barrette d'éléments photosensibles (détecteur infrarouge), mais parfois celle d'une matrice de tels éléments photosensibles. Ce détecteur photosensible est disposé dans le plan focal d'un dispositif optique réalisant la résolution recherchée.

Dans les dispositifs de prise de vue de ce type, l'image du champ dans ledit plan focal est grande par rapport aux dimensions du détecteur photosensible, de sorte qu'il n'est pas possible de prendre en une seule fois la prise de vue de la totalité dudit champ. On prévoit donc un dispositif mobile de déflexion de faisceau lumineux, constitué par exemple par au moins un miroir, assurant le défilement, sur ledit détecteur, de la totalité de l'image du champ dans ledit plan focal. En d'autres termes, le détecteur photosensible constitué d'une barrette d'éléments photosensibles ponctuels disposés sur quelques lignes et quelques dizaines ou centaines de colonnes, constitue un rectangle, dont la longueur est orientée selon un angle d'azimut constant, sur lequel défile une bande de champ observé, cette bande ayant un mouvement perpendiculaire à la longueur de ce rectangle, c'est-à-dire effectuant un balayage en azimut. L'image d'une autre bande, adjacente, est acquise de la même façon, en fixant un autre angle de site.

L'image totale est ainsi obtenue par la juxtaposition de ces diverses bandes.

Pour réaliser un tel balayage, on peut par exemple utiliser, comme dispositif de déflexion, un miroir tournant autour d'un premier axe de rotation passant sensiblement par le centre dudit miroir et disposé de façon colinéaire avec l'axe du dispositif optique, la rotation autour de ce premier axe de rotation définissant un déplacement en azimut par rapport au champ observé ; ledit miroir peut également tourner autour d'un second axe de rotation passant aussi par le centre du miroir et perpendiculaire au premier axe de rotation, la position en rotation autour de ce second axe définissant un déplacement en site par rapport au champ observé (voir par exemple le dispositif décrit dans DE-A-30 05 427).

Par exemple, le balayage complet du champ observé est obtenu en donnant successivement des valeurs différentes à l'angle d'inclinaison du dispositif de déflexion autour dudit second axe de rotation et, pour chacune de ces valeurs d'angles différentes, à faire varier de façon continue, entre deux valeurs extrêmes prédéterminées, l'angle dudit dispositif de déflexion autour dudit premier axe de rotation.

Pour que la résolution et la sensibilité pour l'image issue du détecteur soient optimales, il y a lieu d'assurer que chaque élément photosensible appartenant à une ligne donnée du détecteur balaye, à travers le mouvement du déflecteur, les mêmes éléments dans le champ observé.

Or, dans les dispositifs de prise de vue à grand champ du type décrit ci-dessus, la rotation du dispositif de déflexion provoque, par rapport au champ observé, une rotation de l'image du détecteur autour d'un axe perpendiculaire à son plan, rotation égale à l'angle de rotation du dispositif de déflexion autour du premier axe.

Cette rotation est donc d'autant plus grande que le champ est plus grand.

Cette rotation provoque donc une dispersion de la position du point de focalisation de chaque point du champ sur plusieurs lignes du détecteur.

La présente invention a pour objet de remédier à cet inconvénient.

A cet effet, selon l'invention, le procédé pour le balayage d'un champ observé par un détecteur photosensible plan, comportant plusieurs colonnes d'éléments photosensibles, au moyen d'un déflecteur optique recevant un faisceau incident et dirigeant un faisceau défléchi vers ledit détecteur photosensible à travers un dispositif optique de focalisation, ledit déflecteur étant susceptible de tourner à la fois, autour d'un premier axe de rotation colinéaire à l'axe dudit dispositif optique de focalisation et autour d'un second axe de rotation perpendiculaire au premier axe de rotation, ledit balayage s'effectuant transversalement auxdites colonnes d'éléments photosensibles, est remarquable en ce que :
- pour chaque valeur donnée à l'angle du déflecteur autour dudit premier axe de rotation, on calcule le carré de la valeur dudit angle du déflecteur autour dudit premier axe de rotation ;
- on ajoute, à la valeur de l'angle du déflecteur relatif à sa rotation autour dudit second axe de rotation, une correction sous forme d'une quantité proportionnelle audit carré de la valeur de l'angle du déflecteur relatif à sa rotation autour du premier axe de rotation, pour obtenir une valeur corrigée d'angle du déflecteur, relativement au second axe de rotation ; et
- on positionne ledit déflecteur selon ladite valeur corrigée d'angle du déflecteur, relativement au second axe de rotation.

Ainsi, lorsqu'on fait varier l'angle d'azimut de faisceau, l'angle de site de faisceau est corrigé de façon que le faisceau lumineux balaye approximativement un arc de cercle centré autour dudit premier axe définissant l'angle d'azimut de faisceau. On impose donc au mouvement du dispositif de déflexion une correction telle que l'image du champ observé se déplace perpendiculairement à l'orientation des colonnes des éléments photosensibles. L'angle de la trajectoire des points successivement observés du champ, sur le détecteur photosensible, ne dépend ainsi plus de l'orientation du déflecteur optique, ce qui supprime la perte de sensibilité due à une trajectoire qui ne serait pas perpendiculaire aux colonnes des éléments photosensibles.

De préférence, le déflecteur est un miroir et ladite correction est égale au quart du carré de la valeur dudit angle du déflecteur autour dudit premier axe de rotation.

Pour la mise en oeuvre du procédé selon l'invention, on prévoit un dispositif de balayage destiné à être disposé devant une optique de focalisation dirigée sur un détecteur pourvu d'une surface photosensible comportant plusieurs colonnes d'éléments photosensibles, ledit dispositif de balayage comprenant :
- un déflecteur optique apte à recevoir un faisceau incident et le défléchir en le dirigeant vers ladite surface photosensible, ledit déflecteur optique ayant une première articulation lui permettant de tourner autour d'un premier axe de rotation destiné à être orienté de manière colinéaire avec l'axe de l'optique de focalisation, et ayant une seconde articulation lui permettant de tourner autour d'un second axe de rotation perpendiculaire audit premier axe de rotation ;
- un premier actionneur apte à entraîner ledit déflecteur en rotation autour dudit premier axe de rotation ;
- un second actionneur apte à entraîner ledit déflecteur en rotation autour dudit second axe de rotation ; et
- un calculateur apte à commander respectivement lesdits premier et second actionneurs ;

et étant remarquable en ce que ledit calculateur comporte des moyens de correction aptes, pour tout angle du faisceau lumineux incident relatif à la rotation du déflecteur autour du premier axe de rotation, à calculer et à appliquer, audit second actionneur, une correction proportionnelle au carré de la valeur dudit angle du faisceau lumineux incident relatif à la rotation du déflecteur autour du premier axe de rotation.

Ainsi, un tel dispositif permet de faire en sorte que, au moins approximativement, le trajet de l'image de la surface photosensible, sur la scène observée, soit perpendiculaire aux colonnes de détecteurs lorsque le déflecteur tourne autour de son premier axe de rotation, et ceci quel que soit l'angle du second axe de rotation.

Les figures du dessin annexé feront bien comprendre comment l'invention peut être réalisée. Sur ces figures, des références identiques désignent des éléments semblables.

La figure 1 illustre schématiquement un dispositif de prise de vue selon l'invention.

La figure 2 illustre le mode de balayage du champ observé.

La figure 3 montre la loi de variation de la correction appliquée, conformément à l'invention, à l'angle de site du déflecteur.

La figure 4 représente le déflecteur avec ses moyens de commande et d'actionnement.

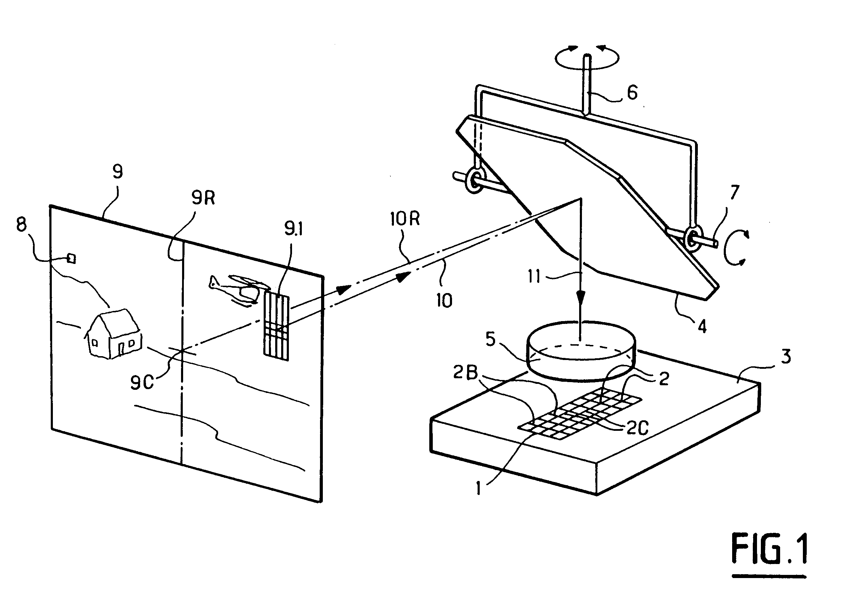

Le dispositif de prise de vue, représenté sur la figure 1, comporte un détecteur 1 ayant une surface photosensible constituée d'éléments photosensibles 2 disposés en lignes 2B et en colonnes 2C.

Un châssis 3 porte ce détecteur 1 photosensible, ainsi qu'un déflecteur 4 de faisceau lumineux, et une optique focalisatrice 5. Le déflecteur 4 est rotatif autour de deux axes de rotation, un premier axe de rotation 6 passant sensiblement par le centre dudit déflecteur 4 et étant colinéaire à l'axe de l'optique focalisatrice 5, tandis que le second axe de rotation 7 est à la fois perpendiculaire au premier axe de rotation 6 et parallèle au plan du déflecteur 4. La position angulaire dudit déflecteur 4 dans sa rotation autour du premier axe de rotation 6 détermine un angle d'azimut du déflecteur, par rapport aux divers points 8 d'un champ 9 observé. De même, la position angulaire dudit déflecteur 4 dans sa rotation autour du second axe de rotation 7 détermine un angle de site du déflecteur. Ce champ observé 9 est supposé être rectangulaire et on définit un axe de référence 9R passant au centre 9C de l'image de ce champ 9 selon un angle d'azimut constant. Le fonctionnement du dispositif peut être assimilé à une exploration d'une surface plane limitée à ce champ 9 et perpendiculaire à l'axe de référence 9R. Sur cette surface plane, on effectue une projection sphérique du paysage, avec comme centre de projection le point de concours des deux axes du déflecteur 4. L'image formée sur cette surface constitue alors l'image du paysage vue par le détecteur 1 photosensible à travers le déflecteur 4 et l'optique focalisatrice 5. Un balayage de l'image du champ 9 par le déflecteur 4 permet de recevoir successivement, sur la surface du détecteur 1, l'image des divers points 8 du champ 9 observé, qui émettent chacun un faisceau élémentaire dont l'ensemble constitue un faisceau incident 10 qui est défléchi par le déflecteur 4 et traverse l'optique focalisatrice 5 pour devenir un faisceau défléchi 11 atteignant les éléments photosensibles 2 de la surface du détecteur 1, la taille de chacun desdits éléments photosensibles définissant la résolution du système de balayage. On peut ainsi considérer, selon le principe du retour inverse de la lumière, que ledit balayage par le déflecteur 4 revient à faire balayer le champ 9, qui a une grande largeur angulaire, par l'image 9.1, de faible largeur angulaire, de la surface du détecteur 1 photosensible sur ledit champ 9. L'orientation du faisceau incident 10 est repérée, d'une part, par un angle d'azimut de faisceau qu'il présente par rapport à l'angle d'azimut du faisceau de référence 10R, et, d'autre part, par un angle de site de faisceau qu'il présente par rapport à l'angle de site dudit faisceau de référence 10R. Dans le cas où le déflecteur 4 est un miroir, l'angle de site du faisceau varie deux fois plus que ne le fait l'angle de site du déflecteur.

Ainsi, l'angle d'azimut du faisceau incident 10 est nul lorsque l'image de la surface du détecteur 1 correspond à une position située sur ledit axe de référence 9R, tandis que l'angle de site de faisceau est nul pour un faisceau incident 10 ayant un même angle de site que le faisceau de référence 10R passant par le centre 9C de l'image du champ 9.

L'angle d'azimut du déflecteur a la même référence de zéro que l'angle d'azimut de faisceau, et est donc proportionnel à celui-ci.

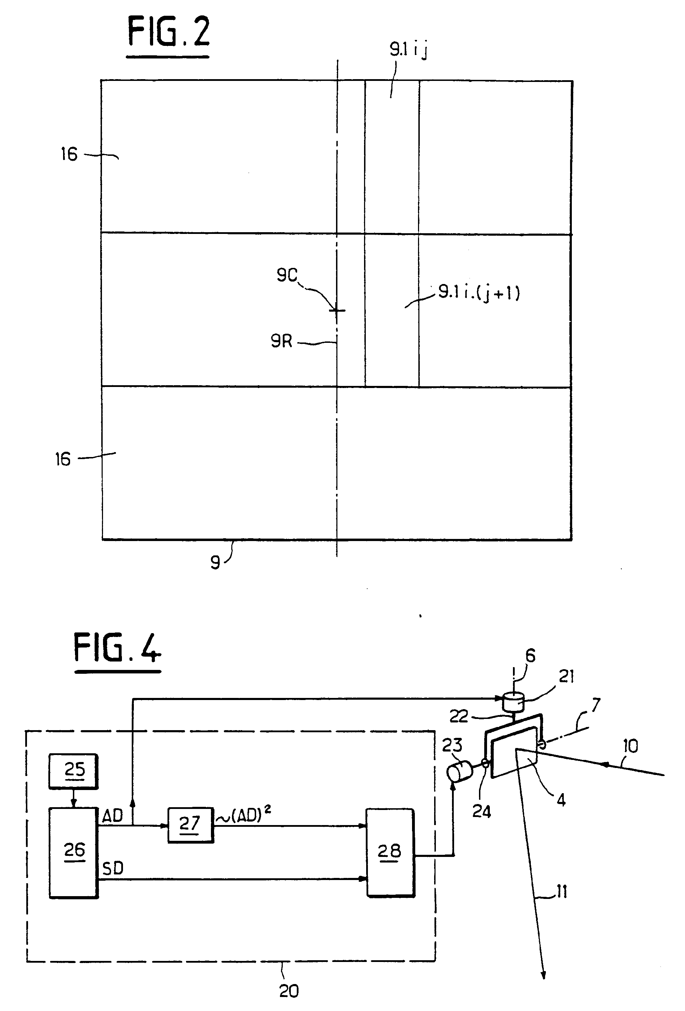

La surface du détecteur 1 photosensible reçoit, à un instant donné, la partie 9.1ij du champ 9 observé, délimitée par le contour de l'image de cette surface du détecteur 1 qui serait projetée en sens inverse sur le champ 9, après passage par le déflecteur 4, comme cela est représenté sur la figure 2. Ce déflecteur 4 déplace la position de cette image de façon continue dans le champ 9, de façon à balayer ce dernier perpendiculairement à la longueur de cette surface du détecteur 1, ce qui permet d'obtenir une bande 16, horizontale dans cet exemple, ce balayage étant répété pour j bandes 16 juxtaposées, en choisissant à chaque fois un nouvel angle de site, comme cela est représenté à la figure 2.

Ainsi, la rotation du déflecteur 4 autour du premier axe de rotation 6 et du second axe de rotation 7 permet d'observer un champ 9 présentant une grande largeur angulaire.

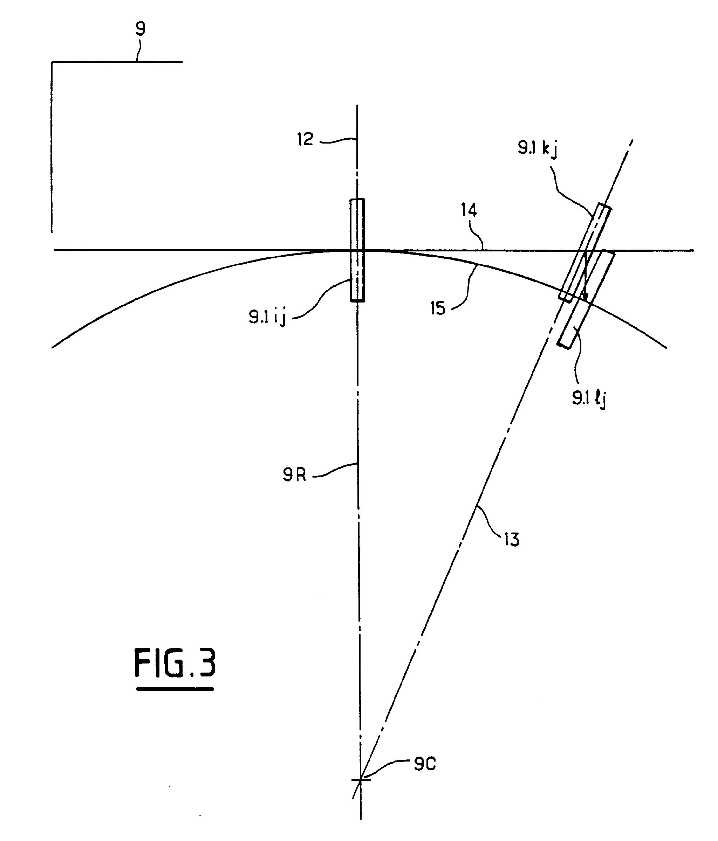

Ce qui vient d'être décrit concerne le fonctionnement théorique du dispositif de la figure 1. En réalité, le fonctionnement vrai est quelque peu différent, car l'orientation de l'image 9.1 dépend de l'angle d'azimut. Sur la figure 3, on a représenté l'effet de la variation de l'angle d'azimut du déflecteur 4 sur l'orientation de l'image du détecteur 1 formée sur l'image du champ 9. Une image 9.1ij de la surface du détecteur 1, à angle d'azimut constant, située au centre du champ 9 observé, définit un rectangle aplati dont la longueur est disposée selon une première ligne droite image 12 à angle d'azimut de faisceau constant sur l'image du champ 9 observé, cette première ligne droite image 12 étant confondue avec ledit axe de référence 9R. Une autre image 9.1kj de la surface du détecteur 1 sur l'image du champ 9, correspondant à un autre angle d'azimut du déflecteur, donne un deuxième rectangle aplati dont la longueur est parallèle à une deuxième ligne droite image 13, formant un certain angle avec la première ligne droite image 12.

Si l'on trace, dans le plan du champ 9, une troisième droite image 14 perpendiculaire audit axe de référence 9R, elle correspond à une ligne de points images à angle de site de faisceau constant. On voit ainsi qu'une image telle que 9.1kj présente une orientation qui tourne à mesure qu'augmente l'angle que fait le faisceau incident 10 correspondant par rapport à une perpendiculaire, telle le faisceau de référence 10R, au plan de l'image du champ 9. De ce fait, le déplacement de cette image 9.1ij à angle de site constant ayant lieu parallèlement à la troisième droite image 14, ce déplacement ne s'effectue plus selon une perpendiculaire à la longueur du rectangle limitant cette image 9.1ij. Ceci entraîne qu'un point 8 du champ observé, qui serait détecté par un seul élément photosensible 2 d'une colonne 2C s'il était situé au centre du champ 9, risque d'être détecté par deux éléments photosensibles 2 situés sur deux lignes 2B voisines.

La présente invention vise à annuler cet étalement créé par la rotation relative des lignes droites images telles que la deuxième ligne droite image 13, correspondant à un angle d'azimut de faisceau constant, par rapport à la direction de balayage.

Conformément à l'invention, pour avoir un déplacement instantané de l'image 9.1kj du détecteur 1 sur la surface de l'image du champ 9 qui soit perpendiculaire à la longueur du rectangle formant l'image des colonnes de barrettes 1C, on transforme une droite image telle que la troisième droite image 14, à angle de site constant, en un arc de cercle 15 tangent à cette troisième droite image 14 à son intersection avec l'axe de référence 9R.

Ainsi, l'image 9.1ij de la surface du détecteur 1 sur le champ 9 se déplace selon l'arc de cercle 15, ce qui assure un déplacement perpendiculaire à la longueur de ce rectangle, donc aussi aux colonnes 2C d'éléments photodétecteurs.

Cette transformation de la trajectoire est une correction qui s'effectue par translation parallèle à l'axe de référence 9R, et d'une amplitude définie ci-après. L'amplitude de cette correction croît à mesure que l'angle d'azimut croît en valeur absolue, c'est-à-dire que l'on s'éloigne du point de tangence entre la droite image 14 et l'arc de cercle 15.

Pour ce faire, on apporte une correction à l'angle de site de faisceau en fonction de l'angle d'azimut de faisceau. Une correction appropriée optimale est de corriger l'angle de site de faisceau d'une valeur proportionnelle au carré de la valeur de l'angle d'azimut de faisceau, tous'les angles étant exprimés en radians.

En effet, la correction doit avoir une loi de variation quadratique en fonction de l'angle d'azimut de faisceau pour transformer une droite en cercle, puisque la correction revient à translater, parallèlement à l'axe de référence 9R, un point de la droite image 14 en un point correspondant de l'arc de cercle 15, d'une amplitude égale à la différence à 1 du cosinus de l'angle d'azimut de faisceau, le développement limité de ladite différence ayant son terme principal égal à la moitié du carré de l'angle d'azimut de faisceau.

Par ailleurs, l'amplitude de cette correction va déterminer le rayon de courbure de l'arc de cercle 15, le cercle correspondant à cet arc de cercle 15 étant centré sur le centre 9C, et ayant un rayon égal à la distance entre son centre 9C et la droite image 14 tangente audit arc de cercle 15.

Dans le cas où le déflecteur 4 est un miroir, ce résultat est obtenu en augmentant l'angle de site du déflecteur d'une valeur égale au quart du carré de l'angle d'azimut du déflecteur, puisque l'angle d'azimut de faisceau est égal à l'angle d'azimut du déflecteur et qu'un miroir va fournir, pour toute variation de l'angle de site du déflecteur, une variation double pour l'angle de site de faisceau.

Ainsi, à tout mouvement de balayage du déflecteur 4 en azimut, on associe un mouvement correcteur du déflecteur 4 en site, d'un angle tel qu'il entraîne une correction de l'angle de site de faisceau correspondant à la valeur calculée comme indiqué ci-dessus. Il n'est pas obligatoire que ce déflecteur 4 entraîne une variation de déflexion double en angle de site par rapport à la variation de son angle de site du déflecteur ; selon le type de déflecteur utilisé, on commande une correction de l'angle de site du déflecteur appropriée pour obtenir la correction voulue de l'angle de site de faisceau.

On doit ainsi réaliser de façon simultanée ces deux rotations, en azimut et site, ce qui nécessite de pouvoir calculer en temps réel la correction en site.

Un dispositif de balayage selon l'invention est représenté à la figure 4. Un calculateur 20 commande, d'une part, un premier actionneur 21, porté par le châssis 3, faisant tourner le déflecteur 4 autour d'une première articulation 22 de son premier axe de rotation 6, et, d'autre part, un second actionneur 23, porté par le châssis 3, faisant tourner ledit déflecteur 4 autour d'une seconde articulation 24 de son second axe de rotation 7.

Le balayage de tous les points 8 du champ 9 est effectué en choisissant, par exemple, une valeur de référence de l'angle de site du déflecteur, relative à un angle d'azimut du déflecteur nul, c'est-à-dire une valeur non corrigée de l'angle de site du déflecteur, à partir de laquelle on va, pour chaque rectangle 9.1 du champ 9 observé, calculer une correction de l'angle de site du déflecteur 4 et commander l'orientation dudit déflecteur 4 selon cette valeur corrigée, ce qui permet d'obtenir la correction voulue de l'angle de site de faisceau. Par ailleurs, on donne, à l'angle d'azimut du déflecteur, une suite de valeurs successives le faisant varier entre une première valeur extrême et une seconde valeur extrême, préalablement déterminées, encadrant sa valeur nulle, en calculant au moyen du calculateur 20, pour chacune desdites valeurs successives prises par l'angle d'azimut du déflecteur, la correction à apporter à l'angle de site du déflecteur, et en appliquant ladite correction au moyen du second actionneur 23.

Ces opérations sont répétées autant de fois qu'il est nécessaire d'effectuer des balayages en azimut, compte tenu de la longueur du rectangle 9.1 par rapport à la taille en site du champ 9, ce qui permet de balayer une fois la totalité du champ 9.

Le calculateur 20 comporte un séquenceur 25 lui fournissant une trame temporelle de balayage permettant l'enchaînement des diverses opérations nécessaires à l'obtention d'une image du champ 9.

Le calculateur 20 est ainsi capable d'associer toute position spécifique 9.1ij d'un rectangle à un instant spécifique à l'intérieur de ladite trame temporelle de balayage. Ainsi, en début de ladite trame temporelle de balayage, le calculateur 20 fixe une première valeur extrême de référence de l'angle de site du déflecteur, prédéterminée, et commande, au moyen dudit premier actionneur 21, un balayage entre lesdites première et seconde valeurs extrêmes de l'angle d'azimut du déflecteur. A chaque position temporelle dans ladite trame temporelle, le calculateur 20 est ainsi en mesure de calculer la correction à appliquer à l'angle de site du déflecteur, puisqu'il connaît la valeur de référence de l'angle de site du déflecteur, c'est-à-dire l'angle de site du déflecteur non corrigé et la valeur de l'angle d'azimut du déflecteur.

Lorsqu'un balayage à valeur de référence constante de l'angle de site du déflecteur a été effectué pour une bande de rectangles 9.1ij, la même suite d'opérations se répète pour un angle de site de référence du déflecteur de valeur voisine, après transmission d'une commande appropriée audit second actionneur 23, aboutissant au balayage d'une bande de rectangles 9.1i(j+1) voisins de ceux qui viennent d'être balayés, et ceci jusqu'à une seconde valeur extrême de référence prédéterminée de l'angle de site du déflecteur, correspondant à la fin de ladite trame temporelle.

Pour ce faire, à chaque instant à l'intérieur de la trame temporelle, une mémoire 26 adressée par le séquenceur 25 et recevant ladite trame temporelle, fournit une valeur de référence d'angle de site du déflecteur SD et une valeur d'angle d'azimut du déflecteur AD. Cette valeur d'angle d'azimut du déflecteur AD est appliquée au premier actionneur 21 et à un moyen de calcul 27 dudit calculateur 20, qui en calcule le quart du carré, dans le cas où le déflecteur 4 est un miroir défléchissant l'angle de site de faisceau d'une valeur double de la variation de son angle de site du déflecteur, ce qui donne la valeur de la correction à appliquer sur la valeur de référence de l'angle de site du faisceau. Un additionneur 28 du calculateur 20 reçoit ladite valeur de la correction et l'ajoute à la valeur de référence de l'angle de site du déflecteur SD, en provenance de la mémoire 26. Cet additionneur 28 fournit ainsi une valeur corrigée de l'angle de site du déflecteur qui est appliquée au second actionneur 23.

Par ailleurs, la correction n'étant une bonne approximation de la valeur théorique que lorsque l'angle d'incidence du faisceau incident 10 sur la surface du champ 9 n'est pas trop éloigné de la perpendiculaire, cette correction perd de la précision à mesure que diminue cet angle d'incidence, ce qui fait que, dans un tel cas, il peut être plus avantageux d'apporter une correction précise pour les grandes déflexions du faisceau incident 10, quitte à tolérer un défaut, d'amplitude limitée, pour les angles proches de l'incidence normale. Cela peut ainsi amener à ne pas utiliser le coefficient un quart pondérant la valeur théorique du carré de l'angle d'azimut du déflecteur, mais à utiliser un autre coefficient, ce qui donnera un autre cercle 15 de rayon différent.

## Revendications

1. Procédé pour le balayage d'un champ (9) observé par un détecteur photosensible plan (1), comportant plusieurs colonnes (2C) d'éléments photosensibles (2), au moyen d'un déflecteur optique (4) recevant un faisceau incident (10) et dirigeant un faisceau défléchi (11) vers ledit détecteur photosensible (1) à travers un dispositif optique de focalisation (5), ledit déflecteur (4) étant susceptible de tourner, à la fois, autour d'un premier axe de rotation (6) colinéaire à l'axe dudit dispositif optique de focalisation (5) et autour d'un second axe de rotation (7) perpendiculaire au premier axe de rotation (6),
caractérisé en ce que :
- pour chaque valeur donnée à l'angle du déflecteur (4) autour dudit premier axe de rotation (6), on calcule le carré de la valeur dudit angle du déflecteur (4) autour dudit premier axe de rotation (6) ;
- on ajoute, à la valeur de l'angle du déflecteur (4) relatif à sa rotation autour dudit second axe de rotation (7), une correction sous forme d'une quantité proportionnelle audit carré de la valeur de l'angle du déflecteur (4) relatif à sa rotation autour du premier axe de rotation (6), pour obtenir une valeur corrigée d'angle du déflecteur (4), relativement au second axe de rotation (7) ; et
- on positionne ledit déflecteur (4) selon ladite valeur corrigée d'angle du déflecteur (4), relativement au second axe de rotation (7).

2. Procédé selon la revendication 1, caractérisé en ce que ledit déflecteur (4) est un miroir, et ladite correction est égale au quart du carré de la valeur de l'angle dudit miroir (4) autour dudit premier axe de rotation (6).

3. Dispositif de balayage destiné à être disposé devant une optique de focalisation (5) dirigée sur un détecteur (1) pourvu d'une surface photosensible comportant plusieurs colonnes (2C) d'éléments photosensibles (2), ledit dispositif de balayage comprenant :
- un déflecteur optique (4) apte à recevoir un faisceau incident (10) et le défléchir en le dirigeant (11) vers ledit détecteur (1), ledit déflecteur optique (4) ayant une première articulation (22) lui permettant de tourner autour d'un premier axe de rotation (6) destiné à être orienté de manière colinéaire avec l'axe optique de l'optique de focalisation (5), et ayant une seconde articulation (24) lui permettant de tourner autour d'un second axe de rotation (7) perpendiculaire audit premier axe de rotation (6) ;
- un premier actionneur (21) apte à entraîner ledit déflecteur (4) en rotation autour dudit premier axe de rotation (6) ;
- un second actionneur (23) apte à entraîner ledit déflecteur (4) en rotation autour dudit second axe de rotation (7) ; et
- un calculateur (20) apte à commander respectivement lesdits premier (21) et second (23) actionneurs ;
caractérisé en ce que ledit calculateur (20) comporte des moyens (25,26,27,28) de correction aptes, pour tout angle du faisceau lumineux incident (10) relatif à la rotation du déflecteur autour du premier axe de rotation (6), à calculer et à appliquer, audit second actionneur (23), une correction proportionnelle au carré de la valeur dudit angle du faisceau lumineux incident (10) relatif à la rotation du déflecteur (4) autour du premier axe de rotation.

## Patentansprüche

1. Verfahren zum Abtasten eines Beobachtungsfeldes (9) durch einen ebenen lichtempfindlichen Detektor (1) mit mehreren Spalten (2C) lichtempfindlicher Elemente (2) über eine optische Ablenkvorrichtung (4), an die ein Einfallsbündel (10) gelangt und die über eine optische Fokussierungsvorrichtung (5) ein abgelenktes Bündel (11) an den lichtempfindlichen Detektor (1) abgibt, wobei sich die Ablenkvorrichtung (4) gleichzeitig um eine zur Achse der optischen Fokussierungsvorrichtung (5) kolineare erste Drehachse (6) und um eine senkrecht zur ersten Drehachse (6) verlaufende zweite Drehachse (7) drehen kann,
dadurch gekennzeichnet, daß:
- für jeden Wert, der dem Winkel der Ablenkvorrichtung (4) um die erste Drehachse (6) verliehen wird, das Quadrat des Winkelwertes der Ablenkvorrichtung (4) um die erste Drehachse (6) berechnet wird;
- dem Winkelwert der Ablenkvorrichtung (4) für deren Drehung um die zweite Drehachse (7) eine Korrektur in Form einer Menge, die dem Quadrat des Winkelwertes der Ablenkvorrichtung (4) für deren Drehung um die erste Drehachse (6) porportional ist, zugerechnet wird, so daß sich ein korrigierter Winkelwert der Ablenkvorrichtung (4) für die zweite Drehachse (7) ergibt; und
- die Ablenkvorrichtung (4) nach dem korrigierten Winkelwert der Ablenkvorrichtung (4) für die zweite Drehachse (7) eingestellt wird.

2. Verfahren nach Anspruch 1, dadurch gekennzeichnet, daß die Ablenkvorrichtung (4) ein Spiegel ist und die Korrektur gleich dem Viertel des Quadrats des Winkelwerts von Spiegel (4) um die erste Drehachse (6) ist.

3. Abtastvorrichtung zur Anordnung vor einer Fokussierungsoptik (5), die auf einen Detektor (1) mit einer lichtempfindlichen Fläche gerichtet ist, die mehrere Spalten (2C) lichtempfindlicher Elemente (2) umfaßt, wobei die Abtastvorrichtung umfaßt:
- eine optische Ablenkvorrichtung (4), an die ein Einfallsbündel (10) gelangt und die dieses Bündel (11) ablenkt und zum Detektor (1) richtet, wobei die optische Ablenkvorrichtung (4) ein erstes Gelenk (22), durch das sie sich um eine erste Drehachse (6) drehen kann, die kolinear zur optischen Achse der Fokussierungsoptik (5) ausgerichtet werden soll, und ein zweites Gelenk (24) hat, durch das sie sich um eine zweite senkrecht zur ersten Drehachse (6) verlaufende Drehachse (7) drehen kann;
- ein erstes Betätigungsorgan (21), das die Ablenkvorrichtung (4) um die erste Drehachse (6) in Drehung versetzen kann;
- ein zweites Betätigungsorgan, das die Ablenkvorrichtung (4) um die zweite Drehachse (7) in Drehung versetzen kann, und
- einen Rechner (20), der das erste (21) und zweite (23) Betätigungsorgan steuern kann,
dadurch gekennzeichnet, daß der Rechner (20) Korrekturmittel (25,26,27,28) hat, mit denen für jeden Winkel des einfallenden Lichtbündels (10) für die Drehung der Ablenkvorrichtung um eine erste Drehachse (6) eine Korrektur proportional zum Quadrat des Winkelwertes des einfallenden Lichtbündels (10) für die Drehung der Ablenkvorrichtung (4) um die erste Drehachse berechnet und dem zweiten Betätigungsorgan (23) aufgegeben werden kann.

## Claims

1. A method of scanning a field (9) observed by a plane photosensitive detector (1) comprising a plurality of columns (2c) of photosensitive elements (2), the scanning being performed by means of an optical deflector (4) that receives an incident beam (10) and directs a deflected beam (11) towards said photosensitive detector (1) through focusing optics (5), said deflector (4) being suitable for rotating both about a first axis of rotation (6) collinear with the axis of said focusing optics (5) and about a second axis of rotation (7) perpendicular to the first axis of rotation (6), the method being characterized in that:
for each value given to the angle of the deflector (4) about said first axis of rotation (6) the square of the value of said angle of the deflector (4) about said first axis of rotation (6) is calculated;
a correction is added to the value of the angle of the deflector (4) relative to its rotation about said second axis of rotation (7) , said correction being in the form of a quantity proportional to the square of value of the angle of the deflector (4) relative to its rotation about the first axis of rotation (6), thereby obtaining a corrected value for the angle of the deflector (4) relative to the second axis of rotation (7); and
said deflector (4) is positioned relative to the second axis of rotation (7) by applying said corrected value of the angle of the deflector (4).

2. A method according to claim 1, characterized in that said deflector (4) is a mirror, and said correction is equal to one-fourth of the square of value of the angle of said mirror (4) about said first axis of rotation (6).

3. Apparatus designed to be disposed in front of focusing optics (5) directed onto a detector (1) provided with a photosensitive surface comprising a plurality of columns (2c) of photosensitive elements (2), said scanning device comprising:
an optical deflector (4) suitable for receiving an incident beam (10) and deflecting it so as to direct it towards said detector (1), said optical deflector (4) having a first hinge (22) enabling it to rotate about a first axis of rotation (6) designed to be orientated in a manner that is collinear with the optical axis of said focusing optics (5), and having a second hinge (24) enabling it to rotate about a second axis of rotation (7) perpendicular to said first axis of rotation (6);
a first actuator (21) suitable for driving said deflector (4) to rotate about said first axis of rotation (6);
a second actuator (23) suitable for driving said deflector (4) to rotate about said second axis of rotation (7); and
a calculator (20) suitable for controlling said first and second actuators (21, 23) respectively;
the apparatus being characterized in that said calculator (20) includes correction means (25, 26, 27, 28) suitable for calculating and applying a correction to said second actuator (23) for each angle of the incident light beam (10) relative to rotation of the deflector about the first axis of rotation (6), said correction being proportional to the square of the value of said angle of the incident light beam (10) relative to rotation of the deflector (4) about the first axis of rotation.
